# EUROPEAN PATENT APPLICATION

(11) **EP 2 502 732 A1**
(43) Date of publication of application: **26.09.2012**
(21) Application number: 10831574.8
(22) Date of filing: 17.11.2010
(51) Int. Cl.: B29C 70/06, B29C 43/46, B29C 43/58, B29K 105/06, B29L 9/00

(54) **METHOD FOR PRODUCING COMPOSITE MATERIAL COMPONENTS, DEVICE FOR PRODUCING COMPOSITE MATERIAL COMPONENTS, AND INSPECTION DEVICE**

(30) Priority: 18.11.2009 JP 2009263293
(71) Applicant: Mitsubishi Heavy Industries, Ltd., Tokyo 108-8215 (JP)
(72) Inventor: KAWAGUCHI Takayuki, Tokyo 108-8215 (JP); KAWAMURA Tetsuya, Tokyo 108-8215 (JP); WATANABE Suguru, Tokyo 108-8215 (JP); NOOKA Satoru, Tokyo 108-8215 (JP); ONO Hideomi, Tokyo 108-8215 (JP)
(74) Representative: HOFFMANN EITLE
(86) International application number: PCT/JP2010/070462
(87) International publication number: WO 2011/062180

(57) **Abstract**

A method for producing composite material components is provided with a process of laminating fiber-reinforced plastic tape. The method includes, at a plurality of sites from an attachment starting site to an attachment ending site of a first fiber-reinforced plastic tape, determining an attachment state of the first fiber-reinforced plastic tape during lamination of the fiber-reinforced plastic tape. The lamination is stopped when it is determined that the first fiber-reinforced plastic tape overlaps with a second fiber-reinforced plastic tape at a first site of the plurality of sites and that a gap exists between the first fiber-reinforced plastic tape and the second fiber-reinforced plastic tape at a second site of the plurality of sites. And, the lamination is continued when it is determined that the first fiber-reinforced plastic tape overlaps with the second fiber-reinforced plastic tape at all of the plurality of sites.

## Description

### Technical Field

The present invention relates to a method for producing composite material components in which a fiber-reinforced plastic member is used.
The present application claims the right of priority to Japanese Patent Application No. 2009-263293 filed on November 18, 2009, in Japan, with the content cited herewith.

### Background Art

Fiber-reinforced plastic members have been used as a structural member, etc., for aircraft. Patent Document 1 discloses an automatic lamination molding device which automatically carries out lamination and molding of a fiber-reinforced plastic tape by a fiber placement method. Patent Document 1 does not disclose determination of an attachment state of the fiber-reinforced plastic tape.

Patent Document 2 discloses a pattern inspection method on the basis of edge detection.

### Prior Art Documents

### Patent Documents

Patent Document 1: Japanese Published Unexamined Patent Application No. 2008-30296
Patent Document 2: Japanese Published Unexamined Patent Application No. 2001-338304

### Summary of the Invention

### Problem to be Solved by the Invention

A method for producing composite material components, a device for producing composite material components, and an inspection device in the present invention prevent an incorrect determination "improper" being made of an attachment state of a properly attached fiber-reinforced plastic tape.

### Means for Solving the Problem

The present invention adopts the following configurations corresponding to each drawing shown in an embodiment. However, reference numerals given to each constituent only exemplify the constituents and shall not be construed to limit the constituents.

A method for producing a composite material component in the present invention has a process of laminating fiber-reinforced plastic tape. The method for producing the composite material component includes, determining an attachment state of the first fiber-reinforced plastic tape during lamination of the fiber-reinforced plastic tape at a plurality of sites (V1 to Vn) from an attachment starting site (V1) to an attachment ending site (Vn) of a first fiber-reinforced plastic tape (70). The lamination is stopped when it is determined that the first fiber-reinforced plastic tape overlaps with a second fiber-reinforced plastic tape at a first site (V3, V4) of the plurality of sites and that a gap exists between the first fiber-reinforced plastic tape and the second fiber-reinforced plastic tape at a second site (V1, V2, Vn) of the plurality of sites. The lamination is continued when it is determined that the first fiber-reinforced plastic tape overlaps with the second fiber-reinforced plastic tape at all of the plurality of sites.

Determining of the attachment state may include taking a photograph of each image at the plurality of sites by a camera (32) mounted on a lamination head (23) which attaches the first fiber-reinforced plastic tape while moving, thereby taking photographs of a plurality of images and determining whether or not the first fiber-reinforced plastic tape overlaps with the second fiber-reinforced plastic tape or a gap exists between the first fiber-reinforced plastic tape and the second fiber-reinforced plastic tape on the basis of the number of rises in brightness detected from each image of the plurality of images at the plurality of sites.

Determining the attachment state may include, calculating a gap amount between the first fiber-reinforced plastic tape and the second fiber-reinforced plastic tape on the basis of a distance between the rises in brightness when the number of rises in brightness is two.

The lamination may be stopped when it is determined that a gap exists between the first fiber-reinforced plastic tape and the second fiber-reinforced plastic tape at all of the plurality of sites and that the gap amount between the first fiber-reinforced plastic tape and the second fiber-reinforced plastic tape is greater than a predetermined threshold value at least at one of the plurality of sites.

The lamination may be carried out in accordance with a lamination program (27) which stipulates that the fiber-reinforced plastic tapes to be arranged on the same layer will not overlap with each other.

A device for producing composite material components (10) of the present invention is provided with an automatic lamination device (20) which carries out lamination of fiber-reinforced plastic tape and an inspection device (30) which determines an attachment state of a first fiber-reinforced plastic tape at a plurality of sites (V1 to Vn) from an attachment starting site (V1) to an attachment ending site (Vn) of the first fiber-reinforced plastic tape (70) attached by the automatic lamination device during the lamination. The automatic lamination device stops the lamination when the inspection device determines that the first fiber-reinforced plastic tape overlaps with the second fiber-reinforced plastic tape at the first sites (V3, V4) of the plurality of sites and also determines that a gap exists between the first fiber-reinforced plastic tape and the second fiber-reinforced plastic tape at the second sites (V1, V2, Nn) of the plurality of sites. The automatic lamination device continues the lamination when the inspection device determines that the first fiber-reinforced plastic tape overlaps with the second fiber-reinforced plastic tape at all of the plurality of sites.

The automatic lamination device may be provided with a lamination head (23) which attaches the first fiber-reinforced plastic tape, while moving. The inspection device may be provided with a camera (32) mounted on the lamination head. The camera takes a photograph of each image at the plurality of sites, thereby taking photographs of a plurality of images. The inspection device may determine whether or not the first fiber-reinforced plastic tape overlaps with the second fiber-reinforced plastic tape or a gap exists between the first fiber-reinforced plastic tape and the second fiber-reinforced plastic tape on the basis of the number of rises in brightness detected from each image of the plurality of images at the plurality of sites.

When the number of rises in brightness is two, the inspection device may calculate a gap amount between the first fiber-reinforced plastic tape and the second fiber-reinforced plastic tape on the basis of a distance between the rises in brightness.

The automatic lamination device may stop the lamination when it is determined that a gap exists between the first fiber-reinforced plastic tape and the second fiber-reinforced plastic tape at all of the plurality of sites and that a gap amount between the first fiber-reinforced plastic tape and the second fiber-reinforced plastic tape is greater than a predetermined threshold value at least at one of the plurality of sites.

The automatic lamination device may carry out the lamination in accordance with a lamination program (27) which stipulates that fiber-reinforced plastic tapes to be arranged on the same layer will not overlap with each other.

The inspection device may be provided with a lighting (33). The camera may be mounted on the lamination head in such a manner as to be arranged directly above a side end of the first fiber-reinforced plastic tape and also face the side end. The lighting may be mounted on the lamination head in such a manner as to be arranged at a position deviated in a width direction of the first fiber-reinforced plastic tape from directly above the side end and also face the side end.

An inspection device (30) of the present invention is provided with a camera (32) mounted on a lamination head (23) of an automatic lamination device (20) which carries out lamination of fiber-reinforced plastic tape and an information processing device (34). The lamination head attaches a first fiber-reinforced plastic tape (70) while moving during the lamination. The information processing device determines an attachment state of the first fiber-reinforced plastic tape at a plurality of sites (V1 to Vn) of the first fiber-reinforced plastic tape on the basis of a plurality of images photographed by the camera and outputs a lamination stopping signal or a lamination continuing signal on the basis of results determined regarding the attachment state.

The information processing device may output the lamination stopping signal when it is determined that the first fiber-reinforced plastic tape overlaps with the second fiber-reinforced plastic tape at the first sites (V3, V4) of the plurality of sites and that a gap exists between the first fiber-reinforced plastic tape and the second fiber-reinforced plastic tape at the second sites (V1, V2, Vn) of the plurality of sites. Further, the information processing device may output the lamination continuing signal when it is determined that the first fiber-reinforced plastic tape overlaps with the second fiber-reinforced plastic tape at all of the plurality of sites.

### Effect of the Invention

According to the method for producing composite material components, the device for producing composite material components and the inspection device of the present invention, it is possible to prevent an incorrect determination "improper" being made of an attachment state of a properly attached fiber-reinforced plastic tape.

### Brief Description of the Drawings

Fig. 1 is a top view of a device for producing composite material components in a first embodiment of the present invention.
Fig. 2 is a cross-sectional view taken along the line A to A of the device for producing composite material components of Fig. 1.
Fig. 3 is a side view of a lamination head of the device for producing composite material components of Fig. 1.
Fig. 4 is a top view which covers a lamination roller, a camera and a lighting of Fig. 3.
Fig. 5 is a side view which covers the lamination roller, the camera and the lighting of Fig. 3.
Fig. 6 is a block diagram which shows the device for producing composite material components in the first embodiment of the present invention.
Fig. 7 shows a case where no tape which has already been attached near a tape in the process of attachment exists. (a) is a cross-sectional view of a certain site of the tape in the process of attachment, (b) is a view which shows an image of the site, and (c) is a view which shows brightness distribution at the image.
Fig. 8 shows a case where a tape which has already been attached and which is adjacent to a tape in the process of attachment exists. (a) is a cross-sectional view of a site when a gap exists between the tape in the process of attachment and the tape which has already been attached, (b) is a view which shows an image of the site, and (c) is a view which shows brightness distribution at the image.
Fig. 9 shows a case where a tape which has already been attached and which is adjacent to a tape in the process of attachment exists. (a) is a cross-sectional view of a site when the tape in the process of attachment overlaps with the tape which has already been attached, (b) is a view which shows an image of the site, and (c) is a view which shows brightness distribution at the image.
Fig. 10(a), (b), (c), (d) and (e) respectively show the lamination head in preparation for attachment, the lamination head at the start of attachment, the lamination head in the process of attachment, the lamination head on completion of attachment, and the lamination head on standby for attachment.
Fig. 11 shows inspection data obtained when it is determined that a gap exists at all of the plurality of sites from an attachment starting site to an attachment ending site of a tape.
Fig. 12 shows inspection data obtained when it is determined that a gap exists at a certain site of the plurality of sites from the attachment starting site to the attachment ending site of the tape and that overlapping exists at other sites.
Fig. 13 shows inspection data obtained when it is determined that overlapping exists at all of the plurality of sites from the attachment starting site to the attachment ending site of the tape.

### Mode for Carrying Out the Invention

With reference to the attached drawings, hereinafter, a description will be given of embodiments in carrying out the method for producing composite material components, the device for producing composite material components, and the inspection device in the present invention.

### (First embodiment)

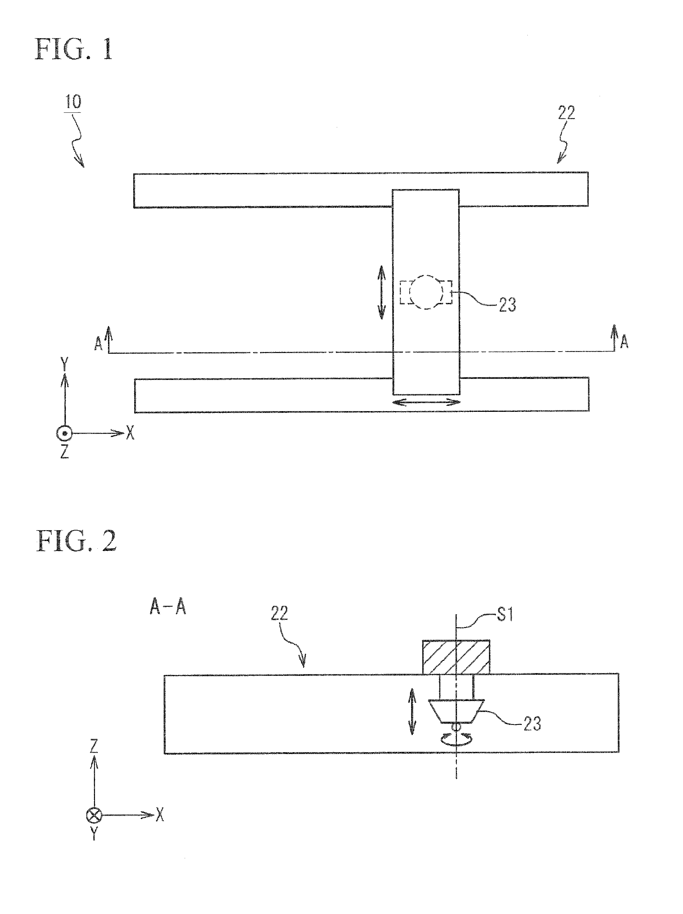

A description will be given of a device for producing composite material components 10 in the first embodiment of the present invention with reference to Fig. 1. The device for producing composite material components 10 produces composite material components by laminating a fiber-reinforced plastic tape. The device for producing composite material components 10 is provided with a driving device 22 and a lamination head 23. An X axis, a Y axis and a Z axis which are orthogonal to each other are defined with regard to the device for producing composite material components 10. The Z axis is an axis which faces upward perpendicularly. The driving device 22 drives the lamination head 23 in a translational manner so as to be parallel to the X axis and also parallel to the Y axis.

In Fig. 2, the driving device 22 drives the lamination head 23 in a translational manner so as to be parallel to the Z axis and also drives the lamination head 23 in a rotational manner around a rotation axis S1parallel to the Z axis. The driving device 22 is provided with three servo mechanisms corresponding respectively to the above-described three types of translational driving and a servo mechanism corresponding to the above-described rotational driving.

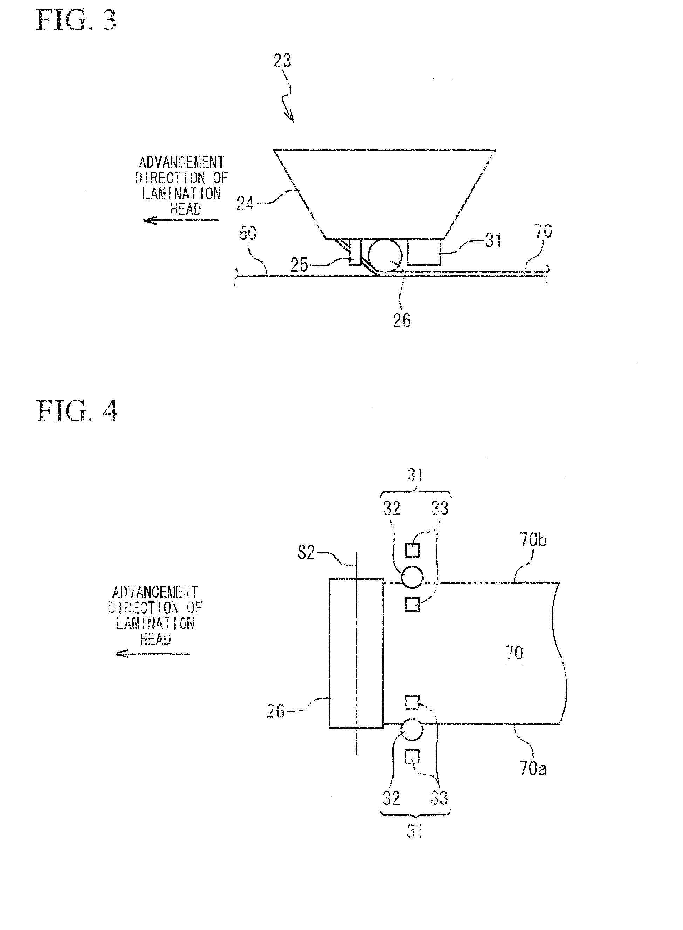

In Fig. 3, the lamination head 23 is driven by the driving device 22 and moves with respect to an attachment object 60. The lamination head 23 attaches a fiber-reinforced plastic tape 70 to the attachment object 60, while moving. Here, the attachment object 60 is a mold or a laminated body of fiber-reinforced plastic tape laminated on the mold. The lamination head 23 is provided with a tape-supplying device 24, a cutter 25 and a lamination roller 26. Two camera units 31 are mounted on the lamination head 23. The tape-supplying device 24 feeds out the tape 70. The lamination roller 26 presses and attaches the fed-out tape 70 to the attachment object 60.

In Fig. 4, the lamination roller 26 presses the tape 70 to the attachment object 60, while rotating around a rotation axis S2 and rolling on the tape 70. The rotation axis S2 is perpendicular to the rotation axis S 1 and parallel to the width direction of the tape 70. The tape 70 is provided on both sides in the width direction respectively with a side end 70a and a 70b. The two camera units 31 are arranged on the rear side in a direction at which the lamination head 23 moves with respect to the lamination roller 26 (an advancement direction) so as to photograph an attachment state of the tape 70. These two camera units 31 are arranged at positions such that they correspond respectively to the side ends 70a and 70b. Hereinafter, there is a case where the camera unit 31 corresponding to the side end 70a is referred to as a left-side camera unit 31. And, there is a case where the camera unit 31 corresponding to the side end 70b is referred to as a right-side camera unit 31. The left-side camera unit 31 is provided with a camera 32 which is arranged directly above the side end 70a and faces the side end 70a, a lighting 33 which is arranged at a position deviated outside in the width direction of the tape 70 from directly above the side end 70a and also facing the side end 70a, and a lighting 33 which is arranged at a position deviated inside in the width direction of the tape 70 from directly above the side end 70a and also facing the side end 70a. The right-side camera unit 31 is provided with a camera 32 which is arranged directly above the side end 70b and faces the side end 70b, a lighting 33 which is arranged at a position deviated outside in the width direction of the tape 70 from directly above the side end 70b and also facing the side end 70b, and a lighting 33 which is arranged at a position deviated inside in the width direction of the tape 70 from directly above the side end 70b and also facing the side end 70a. That is, the lightings 33 are arranged at positions deviated along a straight line parallel to the rotation axis S2 from directly above the side ends 70a and 70b. The camera 32 is, for example, a CCD (charge-coupled device) camera. A light axis of the camera 32 is parallel to the Z axis. The lightings 33 are, for example, LED (light-emitting diode) lightings.

As described above, since the lightings 33 irradiate light obliquely at a fiber-reinforced plastic tape, the side ends of the fiber-reinforced plastic tape are highlighted at an image photographed by the camera units 31.

The side end 70a is included in a photographing range of the left-side camera unit 31 but not included in a photographing range of the right-side camera unit 31. The side end 70b is included in the photographing range of the right-side camera unit 31 but not included in the photographing range of the left-side camera unit 31.

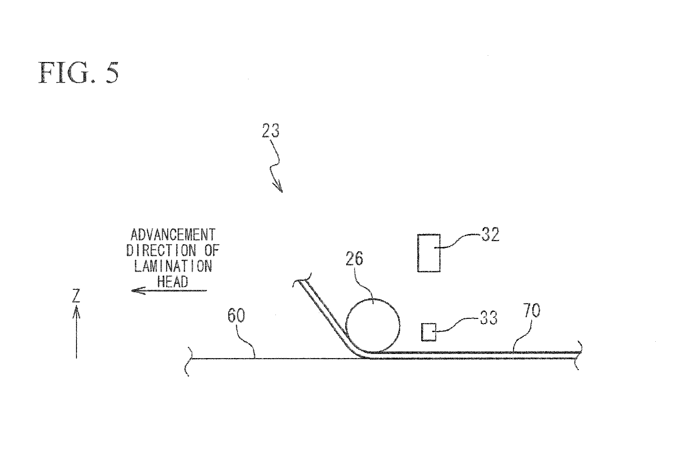

In Fig. 5, the camera 32 and the lighting 33 are arranged in such a manner that a distance between the camera 32 and the tape 70 in the Z axis direction is greater than a distance between the lighting 33 and the tape in the Z axis direction.

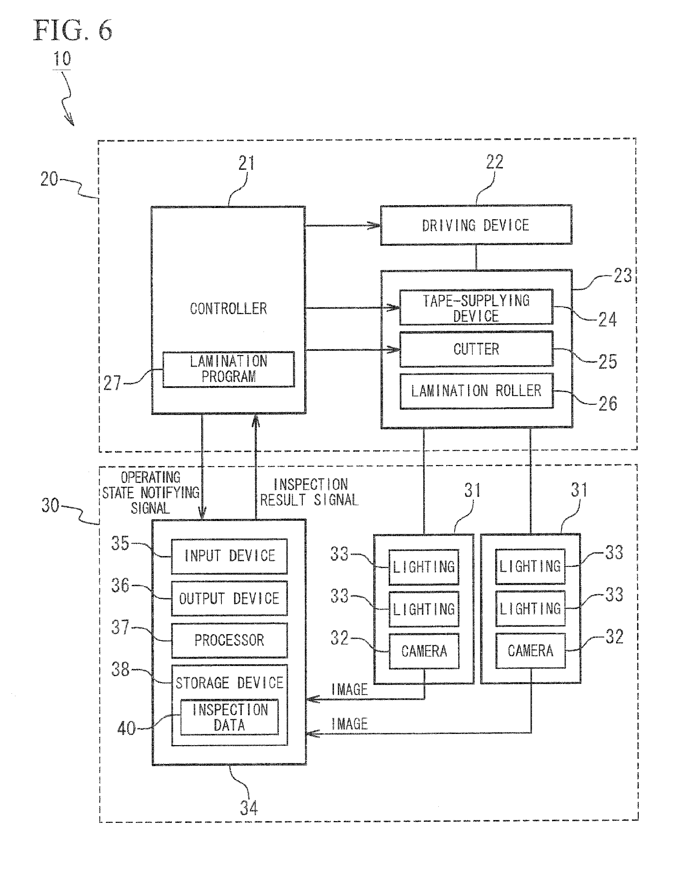

In Fig. 6, the device for producing composite material components 10 is provided with an automatic lamination device 20 and an inspection device 30. The automatic lamination device 20 is provided with a controller 21, in addition to the already-described driving device 22 and the lamination head 23. The inspection device 30 is provided with an information processing device 34 as a computer for inspection, in addition to the already-described two camera units 31. The information processing device 34 is provided with an input device 35, an output device 36, a processor 37, and a storage device 38.

The automatic lamination device 20 carries out lamination of fiber-reinforced plastic tape according to the lamination program (lamination procedures) 27. The controller 21 controls the driving device 22, the tape-supplying device 24, and the cutter 25 in order to carry out lamination of the fiber-reinforced plastic tape on the basis of the lamination program 27. The controller 21 controls the driving device 22 in such a manner that during attachment of the tape 70, the rotation axis S2 of the lamination roller 26 is made perpendicular to a direction at which the lamination head 23 moves. Further, the controller 21 outputs to the inspection device 30 an operating state notifying signal for notifying an operating state of the automatic lamination device 20.

The inspection device 30 determines an attachment state of the fiber-reinforced plastic tape attached by the automatic lamination device 20 on the basis of an image photographed by the camera 32, thereby generating inspection data 40 which shows the results of the determination. The storage device 38 stores the inspection data 40. The inspection device 30 determines whether or not the fiber-reinforced plastic tape is properly attached on the basis of the inspection data 40, thereby outputting an inspection result signal which shows the results of the determination.

The automatic lamination device 20 stops or continues lamination of the fiber-reinforced plastic tape on the basis of the inspection result signal.

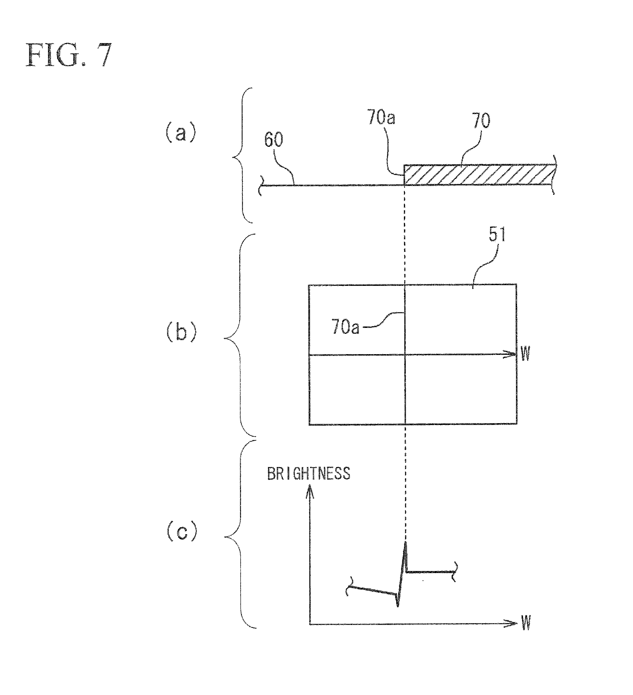

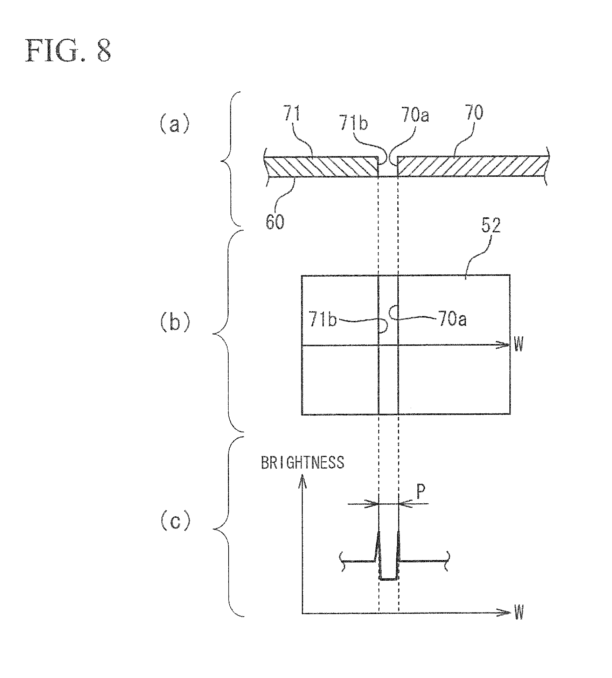

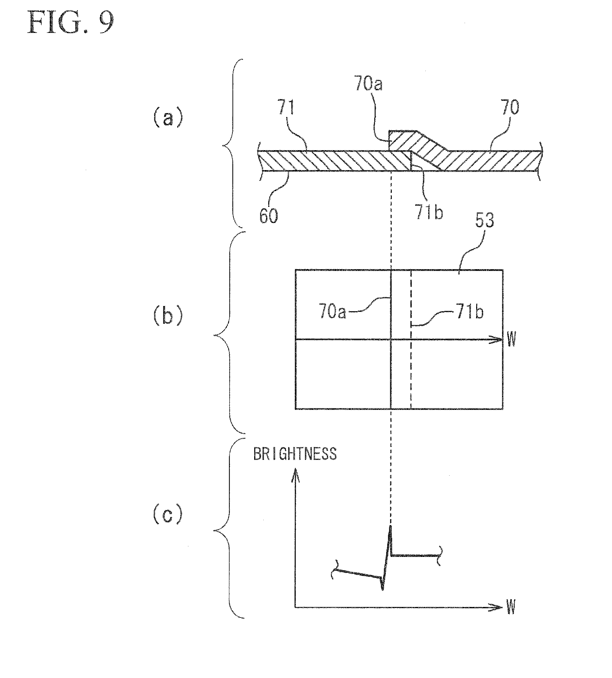

Here, the lamination program 27 stipulates that tapes arranged on the same layer of composite material components are attached so as to be parallel to each other and that the tapes to be arranged on the same layer will not overlap with each other. Hereinafter, this point will be described in detail. As shown in Fig. 7(a), there is a case where the lamination program 27 stipulates that no fiber-reinforced plastic tape which is arranged on the same layer as that of the tape 70 in the photographing range of the left-side camera unit 31 exists. Here, the case where the lamination program 27 stipulates that no fiber-reinforced plastic tape which is arranged on the same layer as that of the tape 70 in the photographing range of the left-side camera unit 31 exists is, for example, a case where the lamination program 27 gives instructions to the automatic lamination device 20 that all the fiber-reinforced plastic tape to be arranged on a certain layer is attached in such a manner that, of all the fiber-reinforced plastic tape arranged on the certain layer of composite material components, the tape 70 is positioned at the extreme end and also other tape is all positioned on the side end 70b side of the tape 70. As shown in Fig. 8(a), there is a case where the lamination program 27 stipulates that a fiber-reinforced plastic tape 71 to be arranged on the same layer as that of the tape 70 exists on the side end 70a side of the tape 70 and also that a gap having a predetermined dimension (a gap amount) between the side end 71b of the tape 71 on the side of the tape 70 and the side end 70a is provided. In this case, a predetermined gap amount is set to be a value such that both of the side end 70a and the side end 71b exist in the photographing range of the left-side camera unit 31. However, as shown in Fig. 9(a), the lamination program 27 does not stipulate that the fiber-reinforced plastic tape 71 to be arranged on the same layer as that of the tape 70 exists on the side end 70a side of the tape 70 and that the tape 70 and the tape 71 overlap with each other.

As shown in Fig. 7(a), a description will be given of a case where attachment is carried out in such a manner that no fiber-reinforced plastic tape other than the tape 70 exists in the photographing range of the left-side camera unit 31. As shown in Fig. 7(b), no side end other than the side end 70a is taken at an image 51 photographed by the camera 32 of the left-side camera unit 31. The W axis of the image 51 is parallel to the width direction of the tape 70. Fig. 7(c) shows brightness distribution on the W axis of the image 51. The brightness distribution only has a rise (peak) corresponding to the side end 70a.

As shown in Fig. 8(a), a description will be given of a case where attachment is carried out in such a manner that the tape 70 and the tape 71 exists in the photographing range of the left-side camera unit 31 and a gap is provided between the tape 70 and the tape 71. As shown in Fig. 8(b), the side ends 70a and 71b are taken at an image 52 photographed by the camera 32 of the left-side camera unit 31. The W axis of the image 52 is parallel to the width direction of the tape 70. Fig. 8(c) shows brightness distribution on the W axis of the image 52. The brightness distribution has a rise corresponding to the side end 70a and a rise corresponding to the side end 71 b.

As shown in Fig. 9(a), a description will be given of a case where attachment is carried out in such a manner that the tape 70 overlaps with the tape 71 in the photographing range of the left-side camera unit 31. When the tape 71 is attached before the tape 70, as shown in Fig. 9(a), the side end 70a is arranged on the tape 71, while the side end 71b is arranged under the tape 70. As shown in Fig. 9(b), only the side end 70a is taken at an image 53 photographed by the camera 32 of the left-side camera unit 31, while the side end 71b is not taken since it is under the tape 70. The W axis of the image 53 is parallel to the width direction of the tape 70. Fig. 9(c) shows brightness distribution on the W axis of the image 53. The brightness distribution has only a rise corresponding to the side end 70a.

As shown in Fig. 7(c) and Fig. 9(c), the processor 37 determines that when there is one rise in brightness detected from an image, the tape 70 overlaps with the other tape at a site at which the image is photographed. As shown in Fig. 8(c), the processor 37 determines that when there are two rises in brightness detected from an image, a gap exists between the tape 70 and a tape adjacent to the tape 70 at a site at which the image is photographed and calculates a gap amount on the basis of a distance P between the two rises. Here, it is possible to detect a rise in brightness by using a generally known method for detecting edges.

A description can be made similarly as described above even in a case where no fiber-reinforced plastic tape exists other than the tape 70 in the photographing range of the right-side camera unit 31 and vice versa.

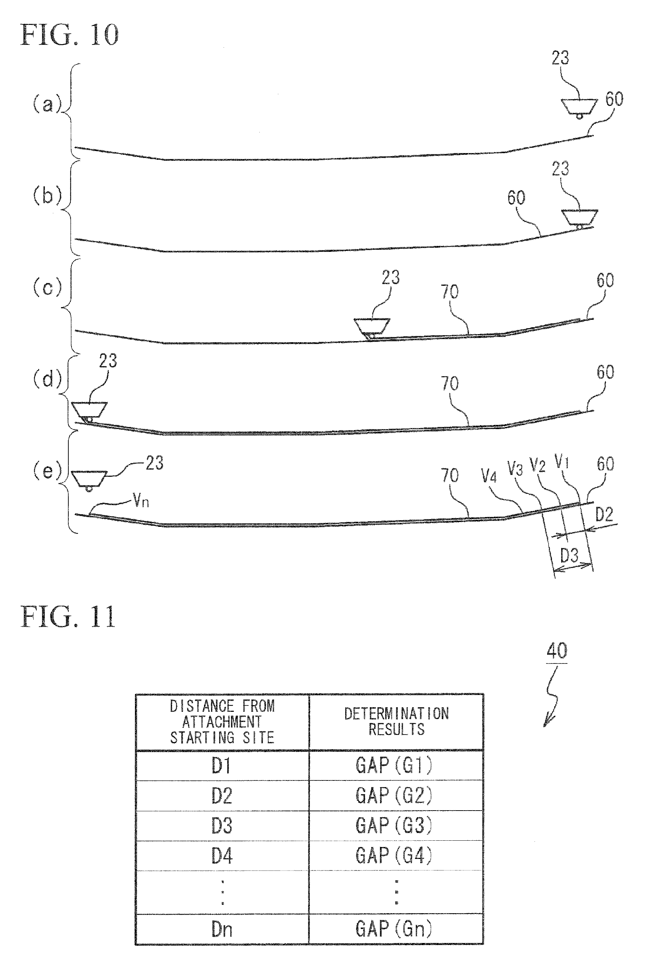

With reference to Fig. 10, a description will be given of a method for producing composite material components which is carried out by the device for producing composite material components 10.

An automatic lamination device 20 laminates a fiber-reinforced plastic tape in accordance with a lamination program 27. Fig.10 (a) shows a state in preparation for lamination when the lamination is in progress. In this instance, a lamination head 23 is arranged so as to be apart from an attachment object 60.

A controller 21 allows the lamination head 23 to move in the Z axis direction by using a driving device 22, thereby holding an attachment starting site of a tape 70 between a lamination roller 26 and the attachment object 60. Fig. 10(b) shows the above-described state.

After the controller 21 outputs an attachment starting signal as an operating state notifying signal, the automatic lamination device 20 starts to attach the tape 70. During attachment of the tape 70, the controller 10 drives the driving device 22 by controlling a value in such a manner that the lamination head 23 moves on a path designated by the lamination program 27. During attachment of the tape 70, the tape-supplying device 24 feeds out the tape 70, and the lamination roller 26 presses and attaches the fed-out tape 70 to the attachment object 60. During attachment of the tape 70, the controller 21 outputs an operating state signal which shows X, Y, Z coordinates of the lamination head 23 at regular time intervals. Fig. 10 (c) shows a state where attachment of the tape 70 is in progress.

The controller 21 stops the movement of the lamination head 23 by using the driving device 22 when the lamination head 23 arrives at an attachment ending position designated by the lamination program 27, cuts the tape 70 by using a cutter 25 and outputs an attachment ending signal. In this instance, an attachment ending site of the tape 70 is held between the lamination roller 26 and the attachment object 60. Fig. 10(d) shows a state that the lamination head 23 stops at an attachment ending position.

The controller 21 allows the lamination head 23 to move in the Z axis direction by using the driving device 22, by which the lamination head 23 is kept at a stand-by position away from the attachment object 60. Fig. 10(e) shows a state where the lamination head 23 is kept at the stand-by position. The controller 21 waits for an inspection result signal from the inspection device 30, with the lamination head 23 kept at the stand-by position.

A description will be given of motions of the inspection device 30 during attachment of a tape 70. The camera 32 starts photographing at regular time intervals in response to an attachment starting signal and finishes photographing in response to an attachment ending signal. Thereby, the camera 32 takes photographs of the respective images at a plurality of sites V1 to Vn from an attachment starting site V1 to an attachment ending site Vn of the tape 70, thereby photographing a plurality of images. The processor 37 calculates a distance D between each of the plurality of sites and the attachment starting site V1 on the basis of the operating state signal which shows the X, Y, Z coordinates of the lamination head 23. Further, the processor 37 detects a rise in brightness from each image of the plurality of images at the plurality of sites V1 to Vn and determines whether or not the tape 70 overlaps with the other tape or a gap exists between the tape 70 and the other tape on the basis of the number of rises in brightness detected from each image. The processor 37 determines that the tape 70 overlaps with the other tape, when the number of rises in brightness is one. The processor 37 determines that a gap exists between the tape 70 and the other tape, when the number of rises in brightness is two. When the number of rises in brightness is two (a gap is determined to exist), the processor 37 calculates a gap amount G between the tape 70 and the other tape on the basis of a distance between the rises in brightness.

The processor 37 generates inspection data 40 and stores the data at a storage device 38. With regard to all the plurality of sites V1 to Vn from the attachment starting site V1 to the attachment ending site Vn of the tape 70, the inspection data 40 shows a distance D from an attachment starting site V1, results of the determination on overlapping or existence of a gap, and a gap amount G on determination of existence of the gap. The processor 37 determines whether or not the tape 70 is attached properly on the basis of the inspection data 40 and outputs an inspection result signal showing the results of the determination.

Fig. 11 shows the inspection data 40 when it is determined that a gap exists at all of the plurality of sites V1 to Vn from the attachment starting site V1 to the attachment ending site Vn of the tape 70. The inspection data 40 shows that a gap (GAP) exists and a gap amount is G1 to Gn at each of the plurality of sites V1 to Vn, a distance of which from the attachment starting site V 1 is D 1 to Dn. Here, a site at which a distance from the attachment starting site V1 is D1 (=0) is the attachment starting site V1, and a site at which a distance from the attachment starting site V1 is Dn is an attachment ending site Vn. As shown in Fig. 11, when it is determined that a gap exists at all of the plurality of sites V1 to Vn from the attachment starting site V1 to the attachment ending site Vn of the tape 70, the processor 37 compares each of the gap amounts G1 to Gn with a predetermined threshold value. When all of the gap amounts G1 to Gn are smaller than the predetermined threshold value, the processor 37 determines that the tape 70 has been properly attached and outputs a lamination continuing signal as an inspection result signal. When at least any one of the gap amounts G1 to Gn is greater than the predetermined threshold value, the processor 37 determines that the tape 70 has not been properly attached and outputs a lamination stopping signal as an inspection result signal.

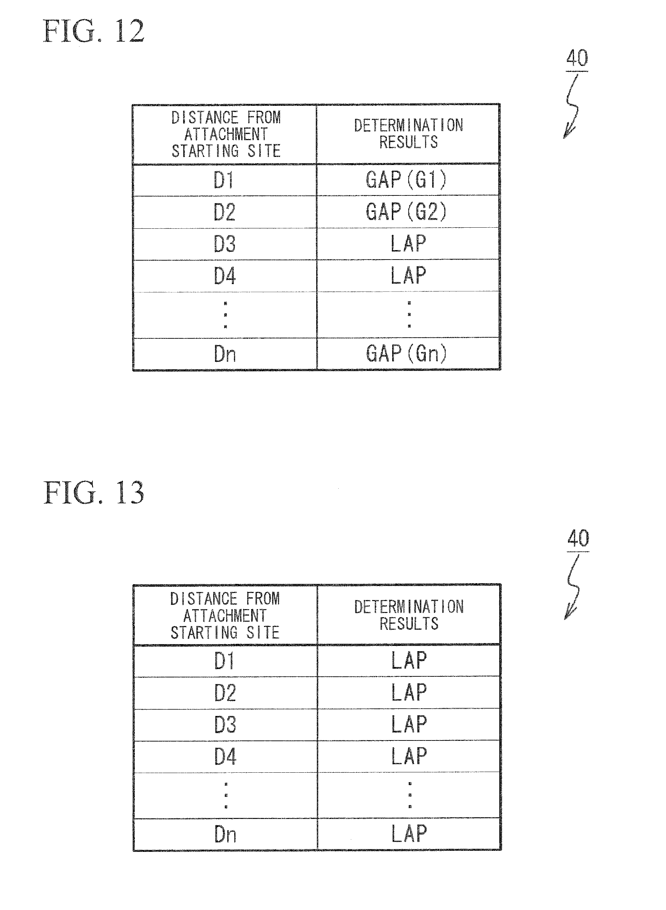

Fig. 12 shows the inspection data 40 when it is determined that a gap exists at sites V1, V2, Vn, each distance of which from the attachment starting site V1 is D1, D2, Dn at the plurality of sites V1 to Vn from the attachment starting site V1 to the attachment ending site Vn of the tape 70 and that overlapping (LAP) exists at the sites V3,V4, each distance of which from the attachment starting site V1 is D3, D4 among the plurality of sites V1 to Vn. As shown in Fig. 12, when it is determined that a gap exists at one site of the tape 70 and overlapping exists at other sites, the inspection device 37 determines that the tape 70 has not been properly attached and outputs a lamination stopping signal as an inspection result signal.

Fig. 13 shows the inspection data 40 when it is determined that overlapping exists at all of the plurality of sites from an attachment starting site to an attachment ending site of the tape 70. Here, as described above, the lamination program 27 stipulates that tape to be arranged on the same layer of composite material components will not overlap with each other. Thus, it is much less likely that the tape 70 overlaps with the other tape at all of the plurality of sites V1 to Vn from an attachment starting site V1 to an attachment ending site Vn. Therefore, when it is determined that overlapping exists at all of the plurality of sites as shown in Fig. 13, the lamination program 27 is considered to stipulate that no fiber-reinforced plastic tape to be arranged on the same layer as that of the tape 70 exists in the photographing range of the camera 32. When it is determined that overlapping exists at all of the plurality of sites V1 to Vn from the attachment starting site V1 to the attachment ending site Vn of the tape 70 as shown in Fig. 13, the processor 37 determines that the tape 70 has been properly attached and outputs a lamination continuing signal as an inspection result signal.

The automatic lamination device 20 continues to laminate a fiber-reinforced plastic tape on the basis of the lamination continuing signal. In this instance, the controller 21 allows the lamination head 23 to move from a stand-by position on the basis of the lamination continuing signal in order to attach a next tape.

The automatic lamination device 20 stops lamination of the fiber-reinforced plastic tape on the basis of the lamination stopping signal. In this instance, an operator determines visually an attachment state of the tape 70 and operates the automatic lamination device 20 for attaching the tape 70 again when re-attachment is necessary. When the re-attachment is not necessary, the operator operates the automatic lamination device 20 to attach a next tape.

In the present embodiment, when it is determined that overlapping exists at all of the plurality of sites V1 to Vn as shown in Fig. 13, it is possible to prevent unnecessary stopping of laminating the tape 70 that is properly attached according to the lamination program 27 due to an incorrect determination "improper" being made of an attachment state of the tape 70.

The present embodiment can be modified in various ways.

For example, in place of the above-described method for determining the overlapping of tape or the existence of a gap on the basis of rises in brightness to calculate a gap amount, a method in which the overlapping or the existence of a gap is determined to calculate a gap amount on the basis of measurement results obtained by using line laser is available.

Further, in place of the above-described method in which the inspection device 30 automatically outputs a lamination continuing signal or a lamination stopping signal on the basis of the inspection data 40, it is possible to use the following method. In this method, an output device 36 outputs result data 40. An operator determines whether or not the tape 70 has been properly attached on the basis of the output result data 40 and operates an input device 35, thereby allowing an inspection device 30 to output a lamination continuing signal or a lamination stopping signal.

A description has been so far made of a preferred embodiment of the present invention, although the present invention shall not be limited thereto. The present invention may be subjected to addition of the configuration, omission, replacement and other modifications within a scope not departing from the gist of the present invention. The present invention shall not be limited to the above description, but will be limited only by the scope of the attached claims.

### Industrial Applicability

According to the method for producing composite material components, the device for producing composite material components and the inspection device of the present invention, it is possible to prevent an incorrect determination "improper" being made of an attachment state of a fiber-reinforced plastic tape which has been properly attached.

### Description of Reference Numerals

10: Device for producing composite material components
20: Automatic lamination device
21: Controller
22: Driving device
23: Lamination head
24: Tape-supplying device
25: Cutter
26: Lamination roller
27: Lamination program
30: Inspection device
31: Camera unit
32: Camera
33: Lighting
34: Information processing device
35: Input device
36: Output device
37: Processor
38: Storage device
40: Inspection data
51: Image
52: Image
53: Image
60: Attachment object (mold or laminated body)
70: Tape
71: Tape
70a: Side end
70b: Side end
71b: Side end
S 1: Rotation axis of lamination head
S2: Rotation axis of lamination roller

## Claims

1. A method for producing composite material components which has a process of laminating fiber-reinforced plastic tape,
the method for producing the composite material components including, determining an attachment state of a first fiber-reinforced plastic tape during lamination of the fiber-reinforced plastic tape at a plurality of sites from an attachment starting site to an attachment ending site of the first fiber-reinforced plastic tape, wherein
the lamination is stopped when it is determined that the first fiber-reinforced plastic tape overlaps with a second fiber-reinforced plastic tape at a first site of the plurality of sites and that a gap exists between the first fiber-reinforced plastic tape and the second fiber-reinforced plastic tape at a second site of the plurality of sites, and
the lamination is continued when it is determined that the first fiber-reinforced plastic tape overlaps with the second fiber-reinforced plastic tape at all of the plurality of sites.

2. The method for producing the composite material components according to Claim 1, wherein
determining the attachment state includes,
taking a photograph of each image at the plurality of sites by a camera mounted on a lamination head which attaches the first fiber-reinforced plastic tape while moving, thereby taking photographs of a plurality of images; and
determining whether or not the first fiber-reinforced plastic tape overlaps with the second fiber-reinforced plastic tape or a gap exists between the first fiber-reinforced plastic tape and the second fiber-reinforced plastic tape on the basis of the number of rises in brightness detected from each image of the plurality of images at the plurality of sites.

3. The method for producing the composite material components according to Claim 2, wherein
determining the attachment state includes,
calculating a gap amount between the first fiber-reinforced plastic tape and the second fiber-reinforced plastic tape on the basis of a distance between the rises in brightness when the number of rises in brightness is two.

4. The method for producing the composite material components according to Claim 3, wherein
the lamination is stopped when it is determined that a gap exists between the first fiber-reinforced plastic tape and the second fiber-reinforced plastic tape at all of the plurality of sites and that the gap amount between the first fiber-reinforced plastic tape and the second fiber-reinforced plastic tape is greater than a predetermined threshold value at least at one of the plurality of sites.

5. The method for producing the composite material components according to any one of Claim 1 to Claim 4, wherein
the lamination is carried out in accordance with a lamination program which stipulates that the fiber-reinforced plastic tapes to be arranged on the same layer will not overlap with each other.

6. A device for producing composite material components comprising:
an automatic lamination device which carries out lamination of fiber-reinforced plastic tape; and
an inspection device which determines an attachment state of a first fiber-reinforced plastic tape at a plurality of sites from an attachment starting site to an attachment ending site of the first fiber-reinforced plastic tape attached by the automatic lamination device during the lamination, wherein
the automatic lamination device stops the lamination when the inspection device determines that the first fiber-reinforced plastic tape overlaps with a second fiber-reinforced plastic tape at a first site of the plurality of sites and also determines that a gap exists between the first fiber-reinforced plastic tape and the second fiber-reinforced plastic tape at a second site of the plurality of sites, and
the automatic lamination device continues the lamination when the inspection device determines that the first fiber-reinforced plastic tape overlaps with the second fiber-reinforced plastic tape at all of the plurality of sites.

7. The device for producing the composite material components according to Claim 6, wherein
the automatic lamination device is provided with a lamination head which attaches the first fiber-reinforced plastic tape while moving,
the inspection device is provided with a camera mounted on the lamination head, the camera takes a photograph of each image at the plurality of sites, thereby taking photographs of a plurality of images, and
the inspection device determines whether or not the first fiber-reinforced plastic tape overlaps with the second fiber-reinforced plastic tape or a gap exists between the first fiber-reinforced plastic tape and the second fiber-reinforced plastic tape on the basis of the number of rises in brightness detected from each image of the plurality of images at the plurality of sites.

8. The device for producing the composite material components according to Claim 7, wherein
when the number of rises in brightness is two, the inspection device calculates a gap amount between the first fiber-reinforced plastic tape and the second fiber-reinforced plastic tape on the basis of a distance between the rises in brightness.

9. The device for producing the composite material components according to Claim 8, wherein
the automatic lamination device stops the lamination when it is determined that a gap exists between the first fiber-reinforced plastic tape and the second fiber-reinforced plastic tape at all of the plurality of sites and that a gap amount between the first fiber-reinforced plastic tape and the second fiber-reinforced plastic tape is greater than a predetermined threshold value at least at one of the plurality of sites.

10. The device for producing the composite material components according to any one of Claim 6 to Claim 9, wherein
the automatic lamination device carries out the lamination in accordance with a lamination program which stipulates that fiber-reinforced plastic tape to be arranged on the same layer will not overlap with each other.

11. The device for producing the composite material components according to any one of Claim 6 to Claim 10, wherein
the inspection device is provided with a lighting,
the camera is mounted on the lamination head in such a manner as to be arranged directly above a side end of the first fiber-reinforced plastic tape and also face the side end, and
the lighting is mounted on the lamination head in such a manner as to be arranged at a position deviated in a width direction of the first fiber-reinforced plastic tape from directly above the side end and also face the side end.

12. An inspection device comprising:
a camera mounted on a lamination head of an automatic lamination device which carries out lamination of fiber-reinforced plastic tape; and
an information processing device, wherein
the lamination head attaches a first fiber-reinforced plastic tape while moving during the lamination and
the information processing device determines an attachment state of the first fiber-reinforced plastic tape at a plurality of sites of the first fiber-reinforced plastic tape on the basis of a plurality of images photographed by the camera and outputs a lamination stopping signal or a lamination continuing signal on the basis of results determined regarding the attachment state.

13. The inspection device according to Claim 12, wherein
the information processing device outputs the lamination stopping signal when it is determined that the first fiber-reinforced plastic tape overlaps with the second fiber-reinforced plastic tape at the first sites of the plurality of sites and that a gap exists between the first fiber-reinforced plastic tape and the second fiber-reinforced plastic tape at the second sites of the plurality of sites, and
the information processing device outputs the lamination continuing signal when it is determined that the first fiber-reinforced plastic tape overlaps with the second fiber-reinforced plastic tape at all of the plurality of sites.
